# EUROPEAN PATENT SPECIFICATION

(11) **EP 4 338 279 B1**
(45) Date of publication and mention of the grant of the patent: **26.11.2025**
(21) Application number: 22724264.1
(22) Date of filing: 09.05.2022
(51) Int. Cl.: H02S 20/10

(54) **PLANT FOR THE PRODUCTION OF ELECTRICITY INCLUDING A TENSILE STRUCTURE**
ANLAGE ZUR STROMERZEUGUNG MIT EINER ZUGSTRUKTUR
INSTALLATION DE PRODUCTION D'ÉLECTRICITÉ COMPRENANT UNE STRUCTURE DE TRACTION

(30) Priority: 10.05.2021 IT 202100011960
(43) Date of publication of application: 20.03.2024
(73) Proprietor: Rem Tec S.R.L., 46041 Asola (MN) (IT)
(72) Inventor: REBOLDI, Alessandro, 25124 Brescia (BS) (IT); MALASPINA, Andrea, 46100 Mantova (MN) (IT); GHIDESI, Giancarlo, 46041 Asola (MN) (IT); KNOCHE, Ronald, 92380 Garches (FR)
(74) Representative: Di Gennaro, Sergio
(86) International application number: PCT/IB2022/054281
(87) International publication number: WO 2022/238865

(56) References cited:
- WO-A2-2012/064189
- DE-A1- 102010 033 702

## Description

The present invention relates to a solar and/or wind power generation plant comprising a raised support structure positioned on agricultural land, adapted to support devices capable of receiving sunlight, for example photovoltaic panels and/or wind modules.

Such plant can be installed on agricultural land, leaving the possibility of using that land for its original purpose, i.e. for growing vegetables, cereals or grazing animals.

The plant comprises a tensile structure which is the overhead support structure for these devices.

Patent application US2017194894A1 and document DE 102010033702 A1 describe various types of solar power plants in which the photovoltaic panels are supported by tensile structures. Agricultural installations can also be built underneath such plant.

For the purposes of the present invention, a tensile structure means a structure made of materials held in place by tension.

A photovoltaic plant is described in patent application WO2019049094 where greenhouses for growing vegetables are placed on the same land as the power plant. The electricity produced by the plant is also used to power devices to manage the crops (e.g. sprinklers, environmental sensors placed inside and outside the greenhouse).

Systems are also known for moving solar panels on two axes, which are known in jargon as "solar trackers".

Such a type of solar tracker is shown in patent application WO2010103378 which describes a supporting structure consisting of support posts held in position by a grid of tie rods, both the support posts and the tie rods being fixed into the ground by a hinge pin.

The solar tracker comprises a main horizontal load-bearing profile, which can rotate about its own axis, to which a plurality of secondary profiles are connected, fixed perpendicularly to the main profile and which can be rotated about their own axis. The solar panels are fixed to these secondary profiles. The ends of the main tracker profile are supported and fixed onto support profiles.

Patent WO2013076573 describes such a support pole structure that also supports wind modules. Such a structure is made two-dimensional in a "checkerboard" arrangement and can also be installed on farming land, since it is elevated and the distance between the support poles is such as to allow the passage of even large farming machinery.

The applicant noted that support structures for solar devices are often bulky and cumbersome. In fact, if the support structure is slender and space-saving, it improves the ability of agricultural vehicles to move around on the ground below the plant. In addition, the limited size of the structure, with the same surface area occupied by the plant, will allow a greater number of panels to be positioned with the same level of shading of the ground below.

The present invention relates to a plant for the production of electricity as defined in claim 1.

Further features of the present invention are contained in the dependent claims.

The characteristics and advantages of the present invention will become more apparent from the following description of an embodiment of the invention, provided by way of non-limiting example, with reference to the schematic attached drawings, wherein:

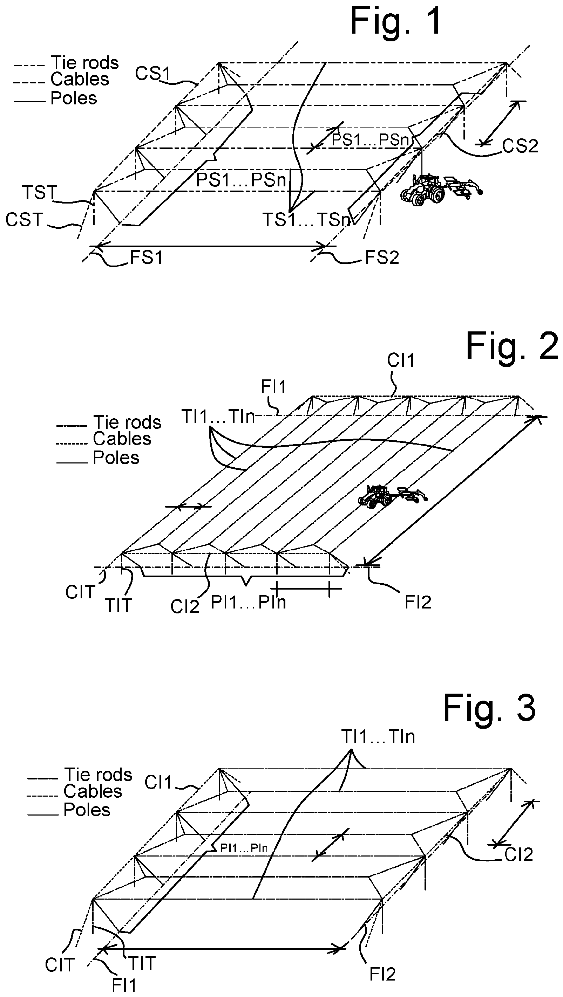

- figure 1 shows an exemplary perspective view of the upper layer of the tensile structure of the plant according to the present invention;
- figure 2 illustrates an exemplary perspective view of the lower layer of the tensile structure of the plant according to an embodiment of the present invention in which the two layers are orthogonal to each other;
- figure 3 illustrates an exemplary perspective view of the lower layer of the tensile structure of the plant according to an embodiment of the present invention in which the two layers are parallel to each other;
- figure 4 shows an exemplary perspective view of the tensile structure of the plant according to the embodiment of the present invention in which the two layers are orthogonal to each other;
- figure 5 shows an exemplary perspective view of a group of solar energy receiving devices fixed onto the tensile structure of the plant in the embodiment of figure 4;
- figure 6 shows an exemplary perspective view of a group of solar energy receiving devices fixed onto the tensile structure of the plant in the embodiment in which the two layers are parallel to each other;

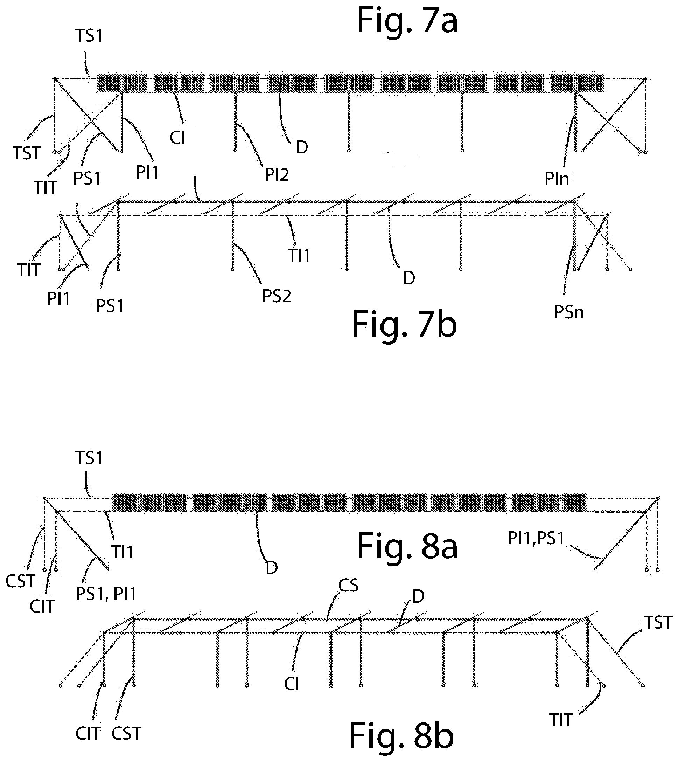

- figures 7a and 7b schematically illustrate a row of the plant (in front and side view) according to the embodiment of figure 4 with receiving devices mounted on this row of the tensile structure;
- figures 8a and 8b schematically illustrate a row of the plant (in front and side view) according to the embodiment in which the two layers are parallel to each other with receiving devices mounted on this row of the tensile structure;

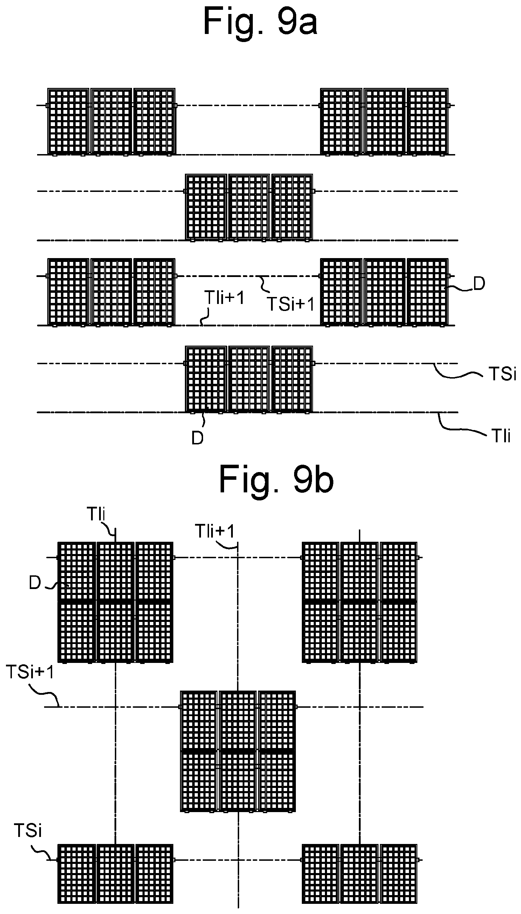

- figures 9a and 9b illustrate assembly diagrams of the receiving devices;
- figure 10 schematically illustrates a plant according to the embodiment with receiving devices mounted in a checkerboard arrangement;
- figure 11 schematically illustrates a plant according to the embodiment with row-mounted receiving devices;
- figure 12 schematically illustrates a further embodiment of plant according to the present invention;
- figure 13 schematically illustrates a detail of figure 12.

With reference to the above-mentioned figures, the plant for the production of electricity according to the present invention is positioned on land T essentially comprising a tensile structure including a first upper layer comprising at least a first FS1 and at least a second FS2 row of support poles PS1 ... PSn, substantially aligned and facing each other and fixed to this ground T, connected between facing poles by longitudinal tie rods TS1 ... TSn parallel to each other and connection cables CS1, CS2 arranged inclined (preferably orthogonally) with respect to these tie rods and which join the poles of each row. Both the longitudinal tie rods and the connection cables comprise an end portions TST and CST thereof fixed to the ground.

The tensile structure includes a second lower layer comprising at least a first FI1 and at least a second FI2 row of support poles PI1...Pin, substantially aligned and facing each other and fixed to this ground T, connected between facing poles by longitudinal tie rods TI1...TIn parallel to each other and connection cables CI1 CI2 arranged inclined (preferably orthogonally) with respect to these tie rods and which join the poles of each row. Both the longitudinal tie rods and the connection cables comprise an end portion TIT and CIT thereof fixed to the ground.

In each of the layers the number of support poles may be less than or equal to the number of longitudinal tie rods. For example, in the illustrated figures, two poles support three tie rods by means of a triangular portion of tie rods which has the top of two poles as two vertices and the union of the two initial portions of tie rods as its third vertex. From the aforesaid three vertices the three tie rods extend towards the opposite poles of the layer.

The two upper and lower layers are positioned substantially overlapping each other and are sized so that the tie rods of the upper layer are at a higher height than the tie rods of the lower layer, allowing a plurality of solar energy receiving devices D to be constrained between an upper and a lower tie rod so as to be normally positioned inclined with respect to the horizontal.

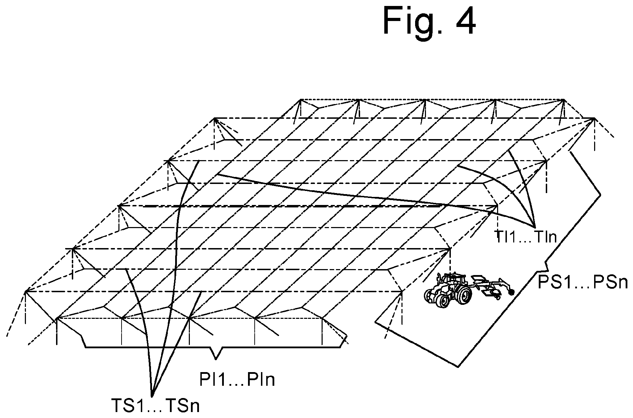

The two layers can be variously oriented to each other on the ground with respect to a vertical axis. In the embodiment illustrated in figure 4, the first layer and the second layer are positioned so as to have their respective tie rods substantially orthogonal to each other and the devices D are positioned near the intersections between the tie rods of the two layers, in so as to form, seen from above, a checkerboard structure.

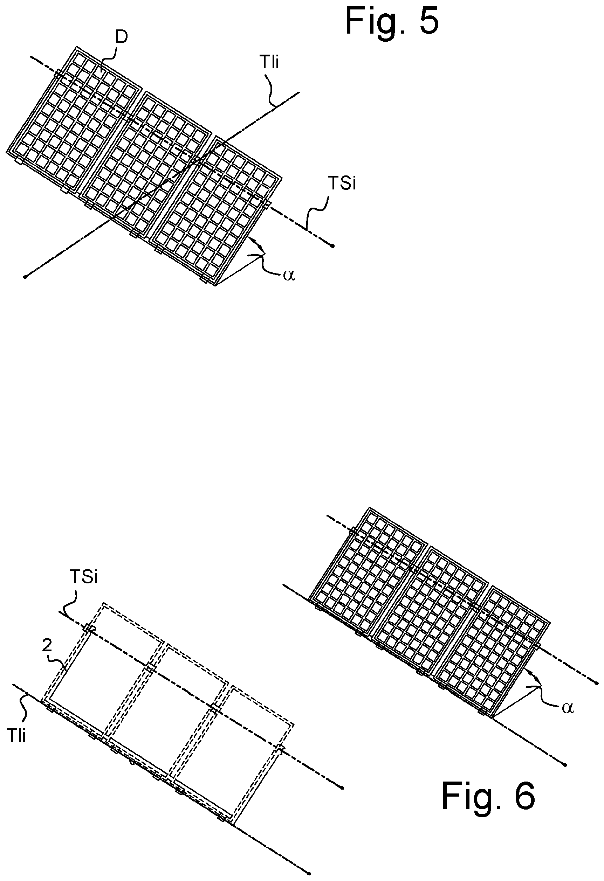

In the embodiment illustrated in figure 5, the first layer and the second layer are positioned so as to have the respective substantially parallel tie rods offset to each other and the devices D are positioned in rows, each being constrained to a tie rod of the upper layer and one of the lower layer.

In other embodiments, the first layer and the second layer are positioned so as to present the respective tie rods inclined to each other so as to form, seen from above, a structure with rhomboidal grids.

Plant forms of various types (plants, trees, shrubs, etc ...) can be grown under the tensile structure on the ground. In addition, agricultural installations such as greenhouses or so on can be obtained on this plant.

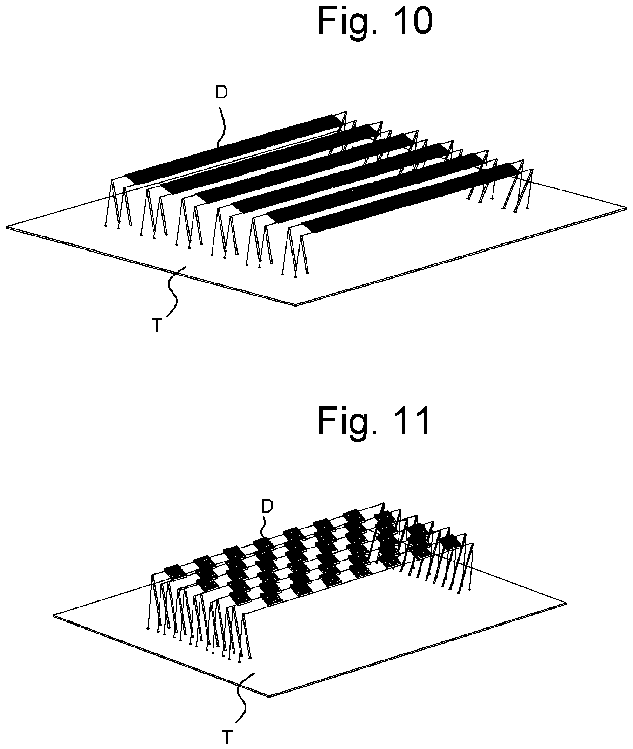

In the embodiment of figure 4 wherein the tie rods are orthogonal to each other, the devices comprise means for fixing to the tie rods comprising a bracket 2 shaped like a "C" which surrounds one or more devices placed side by side. The free ends of the C are constrained to the tie rod TSi of the upper layer so that the device rests its rear layer (the one that is not illuminated) on the tie rod, while the base of the C is constrained to the tie rod Tli of the lower layer. During the plant design phase, by varying the position and height of one layer in relation to the other, it is possible to change the orientation (in particular the angle of inclination α of the device D (panel) in relation to the horizontal plane. In addition, the two-layer tensile structure allows the choice of various panel fixing configurations, such as those shown in figures 10a and 10b.

In particular, figure 10a illustrates a portion of the plant in the embodiment with the tie rods of the two mutually parallel layers in which the panels are positioned in groups and each group on each row is spaced apart from each other, while on the adjacent row the panels are also spaced apart, but offset with respect to the adjacent row, so as to form a checkerboard panel structure. In particular, figure 10b illustrates a portion of the plant in the embodiment with the tie rods of the two mutually orthogonal layers in which the panels are positioned in groups on the intersections between the tie rods of the first layer and of the second layer each time leaving an intersection free from panels, creating a structure of checkerboard panels as in figure 10a.

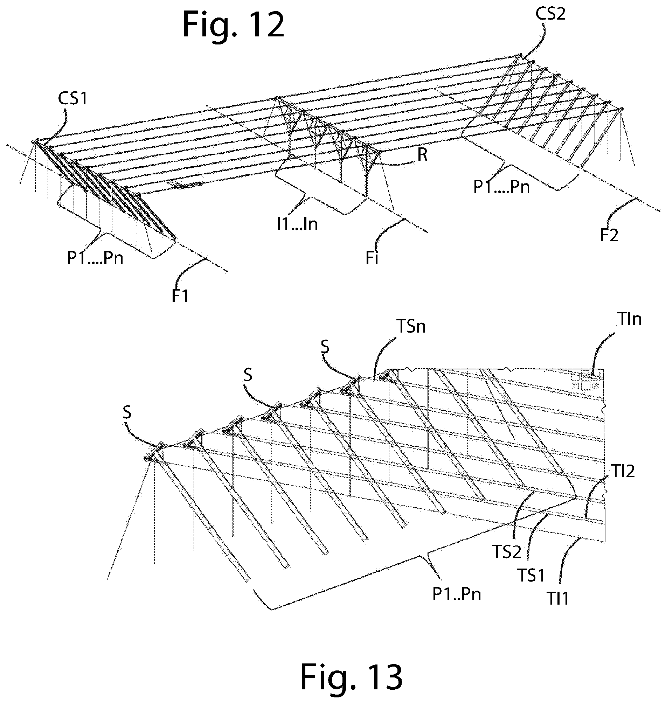

According to a further embodiment illustrated in figures 13 and 14, the plant comprises a first row of ends F1 and a second row of ends F2 formed by a plurality of aligned support posts P1...Pn fixed to such ground on the top of which a transversal support S is fixed, arranged in an inclined position with respect to the horizontal plane defined by the ground T defining one end at a higher level and a lower one.

Upper longitudinal tie rods are connected TS1...TSn at the upper ends of these supports defining an upper layer of tie rods parallel to each other and lower longitudinal tie rods are connected TI1...TIn at the lower ends of these supports defining a lower layer of tie rods parallel to each other.

There are also connection cables CS1 CS2 arranged orthogonally to these tie rods and joining these poles in each row.

According to the present invention, the plant comprises at least one intermediate row Fi of intermediate posts I1...In, which supports both the upper and lower tie rods. These intermediate poles comprise a branched structure R defining three upper ends with a respective support Si on each of them of the same type as those on the end poles. In this way, an intermediate pole of the plant is able to support as many tie rods as three end poles. In this way, more space is available inside the plant on the ground for agricultural vehicles and crops. Like the other embodiments illustrated, the receiving device panels D can be constrained between an upper and lower tie rod so that they are normally positioned inclined with respect to the horizontal.

In addition, the panels can also have their own movement system that allows them to further change their inclination, enabling them to maintain the desired and correct orientation towards the sun.

## Claims

1. Plant for the production of electricity positioned on land (T) essentially comprising a tensile structure which includes:
• a first upper layer comprising at least a first (FS1) and at least a second (FS2) row of support poles (PS1...PSn), substantially aligned and facing each other and fixed to this ground, connected between facing poles by longitudinal tie rods (TS1...TSn) parallel to each other and connection cables (CS1, CS2) arranged inclined with respect to these tie rods and which join the poles of each row,
• a second lower layer comprising at least a first (FI1) and at least a second (FI2) row of support poles (PI1...Pin), substantially aligned and facing each other and fixed to this ground, connected between poles facing each other by longitudinal tie rods (TI1...TIn) parallel to each other and the connection cables (CI1, CI2) arranged, the support poles (PI1...Pin) and the connection cables (CI1, CI2), inclined with respect to these tie rods (TI1...TIn) and that join the poles of each row,
• in which the two upper and lower layers are positioned substantially overlapping each other and are sized so that the tie rods of the upper layer are at a higher height than the tie rods of the lower layer, allowing a plurality of solar energy receiving devices (D) to be constrained between an upper and a lower tie rod so as to be normally positioned inclined with respect to the horizontal,
**characterised in that** the devices comprise means for fixing to the tie rods (TS1...TSn, TI1...TIn) comprising a bracket (2) shaped like a "C" having free ends and a base, the bracket (2) surrounds one or more devices placed side by side, the free ends of the bracket (2) are constrained to a tie rod of the upper layer so that a non-illuminated rear layer of the one or more devices rests on the tie rod (TS1...TSn), while the base of the bracket is constrained to the tie rod (TI1...TIn) of the lower layer.

2. Plant according to claim 1, wherein in each of the layers the number of support poles is less than or equal to the number of longitudinal tie rods.

3. Plant according to claim 2, wherein two poles support three tie rods by means of a triangular portion of tie rods which has the top of two poles as two vertices and the union of the two initial portions of tie rods as its third vertex; from the aforesaid three vertices the three tie rods extend towards the opposite poles of the layer.

4. Plant according to claim 1, wherein the first layer and the second layer are positioned so as to have their respective tie rods substantially orthogonal to each other and the devices (D) are positioned near the intersections between the tie rods of the two layers, in so as to form, seen from above, a checkerboard structure.

5. Plant according to claim 1, wherein the first layer and the second layer are positioned so as to have the respective tie rods oriented to each other according to a defined angle and the devices (D) are positioned near the intersections between the tie rods of the two layers, so as to form, seen from above, a checkerboard structure.

6. Plant according to claim 1, wherein the first layer and the second layer are positioned so as to have the respective substantially parallel tie rods offset to each other and the devices (D) are positioned in rows, each being constrained to a tie rod of the upper layer and one of the lower layer.

7. Plant according to claim 1, wherein the first layer and the second layer are positioned so as to present the respective tie rods inclined to each other so as to form, seen from above, a structure with rhomboidal grids.

8. Plant according to claim 1, wherein both the longitudinal tie rods and the connection cables of both layers comprise an end portion (TST, TIT) and (CST, CIT) thereof fixed to the ground.

9. Plant according to claim 1, wherein by varying the position and height of one layer with respect to the other it is possible to modify the orientation, in particular the angle of inclination (α) of the device (D) with respect to the horizontal plane.

10. Plant according to claim 1, wherein the devices (D) are constrained to the tie rods according to an axis having an inclination angle (α) with respect to the horizontal plane and can in turn rotate about such axis.

11. Plant according to claim 5, wherein the panels are positioned in groups and each group on each row is spaced from the other, while on the adjacent row the panels are also spaced apart, but offset with respect to the adjacent row, in order to form a checkerboard panel structure.

12. Plant according to claim 4, wherein the panels are positioned in groups on the intersections between the tie rods of the first layer and of the second layer, each time leaving an intersection free from panels, creating a structure of checkerboard panels.

13. Plant according to claim 5, wherein plant forms of various types (plants, trees, shrubs, etc ...) can be grown under the tensile structure on the ground.

14. Plant according to claim 1, wherein agricultural installations such as greenhouses or so on can be obtained under the tensile structure.

## Patentansprüche

1. Anlage zur Herstellung von Elektrizität, die am Boden (T) positioniert wird, umfassend im Wesentlichen eine Zugstruktur besteht, die umfasst:
• eine erste obere Schicht umfassend mindestens eine erste (FS1) und mindestens eine zweite (FS2) Reihe von Stützpfosten (PS1...PSn), die im Wesentlichen ausgerichtet sind und zueinander zugewandt sind und an diesem Boden befestigt werden, wobei sie zwischen den zueinander zugewandten Pfosten durch zueinander parallele Längszugstangen (TS1...TSn) und Verbindungskabel (CS1, CS2) verbunden sind, die in Bezug auf diese Zugstangen geneigt angeordnet sind und die Pfosten jeder Reihe verbinden,
• eine zweite untere Schicht umfassend mindestens eine erste (FI1) und mindestens eine zweite (FI2) Reihe von Stützpfosten (PI1...Pin), die im Wesentlichen ausgerichtet sind und einander zugewandt sind und an diesem Boden befestigt werden, wobei sie zwischen den zueinander zugewandten Pfosten durch zueinander parallele Längszugstangen (TI1....TIn) und die Verbindungskabel (CI1, CI2) verbunden sind, wobei die Stützpfosten (PI1...Pin) und die Verbindungskabel (CI1, CI2) in Bezug auf diese Zugstangen (TI1...TIn) geneigt sind und die die Pfosten jeder Reihe verbinden,
• in der die beiden oberen und unteren Schichten im Wesentlichen überlappend angeordnet sind und so bemessen sind, dass die Zugstangen der oberen Schicht auf einer höheren Höhe als die Zugstangen der unteren Schicht angeordnet sind, indem sie einer Vielzahl von Solarenergie empfangenden Vorrichtungen (D) ermöglichen, zwischen einer oberen und einer unteren Zugstange eingeschlossen zu werden, so dass sie normalerweise in Bezug auf die Horizontale geneigt positioniert werden,
**dadurch gekennzeichnet, dass** die Vorrichtungen Mittel zur Befestigung an den Zugstangen (TS1...TSn, TI1...TIn) umfassen, die einen "C"-förmigen Bügel (2) aufweisend freie Enden und eine Basis umfassen, wobei der Bügel (2) eine oder mehrere nebeneinander angeordnete Vorrichtungen umgibt, wobei die freien Enden des Bügels (2) an einer Zugstange der oberen Schicht befestigt sind, so dass eine nicht beleuchtete hintere Schicht der einen oder mehreren Vorrichtungen auf der Zugstange (TS1... TSn) aufliegt, während die Basis des Bügels an der Zugstange (TI1... TIn) der unteren Schicht befestigt wird.

2. Anlage nach Anspruch 1, **dadurch gekennzeichnet, dass** in jeder der Schichten die Anzahl der Stützpfosten kleiner als oder gleich der Anzahl der Längszugstangen ist.

3. Anlage nach Anspruch 2, wobei zwei Pfosten drei Zugstangen mittels eines dreieckigen Abschnitts von Zugstangen stützen, der die Spitze von zwei Pfosten als zwei Scheitelpunkte und die Verbindung der beiden anfänglichen Abschnitte von Zugstangen als seinen dritten Scheitelpunkt aufweist; wobei sich die Zugstangen von den vorgenannten drei Scheitelpunkten zu den gegenüberliegenden Pfosten der Schicht erstrecken.

4. Anlage nach Anspruch 1, wobei die erste Schicht und die zweite Schicht angeordnet sind, sodass ihre jeweiligen Zugstangen im Wesentlichen orthogonal zueinander liegen und die Vorrichtungen (D) in der Nähe der Schnittpunkte zwischen den Zugstangen der beiden Schichten angeordnet sind, so dass sie, von oben gesehen, eine Schachbrettstruktur bilden.

5. Anlage nach Anspruch 1, wobei die erste Schicht und die zweite Schicht angeordnet sind, sodass die jeweiligen Zugstangen nach einem bestimmten Winkel zueinander ausgerichtet sind, und die Vorrichtungen (D) in der Nähe der Schnittpunkte zwischen den Zugstangen der beiden Schichten angeordnet sind, so dass sie, von oben gesehen, eine Schachbrettstruktur bilden.

6. Anlage nach Anspruch 1, wobei die erste Schicht und die zweite Schicht angeordnet sind, sodass die jeweiligen im Wesentlichen parallelen Zugstangen zueinander versetzt sind und die Vorrichtungen (D) in Reihen angeordnet sind, wobei jede an einer Zugstange der oberen Schicht und einer der unteren Schicht befestigt wird.

7. Anlage nach Anspruch 1, wobei die erste Schicht und die zweite Schicht angeordnet sind, sodass die jeweiligen Zugstangen zueinander geneigt sind, so dass sie, von oben gesehen, eine Struktur mit Rhomboidgittern bilden.

8. Anlage nach Anspruch 1, wobei sowohl die Längszugstangen als auch die Verbindungskabel beider Schichten einen Endabschnitt (TST, TIT) und (CST, CIT) davon umfassen, die am Boden befestigt sind.

9. Anlage nach Anspruch 1, wobei die Ausrichtung, insbesondere der Neigungswinkel (a) der Vorrichtung (D) in Bezug auf die Horizontalebene, durch Änderung der Lage und der Höhe einer Schicht in Bezug auf die andere verändert werden kann.

10. Anlage nach Anspruch 1, wobei die Vorrichtungen (D) an den Zugstangen nach einer Achse aufweisend einen Neigungswinkel (a) in Bezug auf die Horizontalebene befestigt sind und sich ihrerseits um diese Achse drehen können.

11. Anlage nach Anspruch 5, wobei die Platten in Gruppen angeordnet sind und jede Gruppe in jeder Reihe von der anderen beabstandet ist, während die Platten in der angrenzenden Reihe ebenfalls voneinander beabstandet sind, aber in Bezug auf die angrenzende Reihe versetzt sind, um eine schachbrettartige Plattenstruktur zu bilden.

12. Anlage nach Anspruch 4, wobei die Platten in Gruppen an den Schnittpunkten zwischen den Zugstangen der ersten und der zweiten Schicht angeordnet werden, wobei ein Schnittpunkt jedes Mal frei von Platten bleibt, wodurch eine Struktur aus schachbrettartigen Platten entsteht.

13. Anlage nach Anspruch 5, wobei die Anlage verschiedener Art (Pflanzen, Bäume, Sträucher usw.) unter der Zugstruktur auf dem Boden angebaut werden können.

14. Anlage nach Anspruch 1, wobei landwirtschaftliche Einrichtungen wie Gewächshäuser oder dergleichen unter der Zugstruktur erhalten werden können.

## Revendications

1. Installation de production d'électricité positionnée sur un terrain (T) comprenant essentiellement une structure de traction qui inclut:
• une première couche supérieure comprenant au moins une première (FS1) et au moins une seconde (FS2) rangée de poteaux de soutien (PS1...PSn), sensiblement alignés, se faisant face et fixés au sol, reliés entre les poteaux se faisant face par des tirants longitudinaux (TS1...TSn) parallèles les uns aux autres et des câbles de connexion (CS1, CS2) disposés de manière inclinée par rapport à ces tirants et qui relient les poteaux de chaque rangée,
• une seconde couche inférieure comprenant au moins une première (FI1) et au moins une seconde (FI2) rangée de poteaux de soutien (PI1...Pin), sensiblement alignés et se faisant face et fixés au sol, reliés entre les poteaux se faisant face par des tirants longitudinaux (TI1...TIn) parallèles les uns aux autres et les câbles de connexion (CI1, CI2) disposés, les poteaux de soutien (PI1...Pin) et les câbles de connexion (CI1, CI2), inclinés par rapport à ces tirants (TI1...TIn) et qui relient les poteaux de chaque rangée,
• dans laquelle les deux couches supérieure et inférieure se chevauchent sensiblement et sont dimensionnées de manière à ce que les tirants de la couche supérieure soient plus hauts que les tirants de la couche inférieure, ce qui permet à plusieurs dispositifs récepteurs d'énergie solaire (D) d'être contraints entre un tirant supérieur et un tirant inférieur de manière à être normalement positionnés en position inclinée par rapport à l'horizontale,
**caractérisée en ce que** les dispositifs comprennent des moyens de fixation aux tirants (TS1...TSn, TI1...TIn) comprenant un support (2) en forme de « C » ayant des extrémités libres et une base, le support (2) entoure un ou plusieurs dispositifs placés côte à côte, les extrémités libres du support (2) sont contraintes à un tirant de la couche supérieure de sorte qu'une couche arrière non éclairée du ou des dispositifs repose sur le tirant (TS1.... TSn), tandis que la base du support est contrainte au tirant (TI1.... TIn) de la couche inférieure.

2. Installation selon la revendication 1, dans laquelle, dans chacune des couches, le nombre de poteaux de soutien est inférieur ou égal au nombre de tirants longitudinaux.

3. Installation selon la revendication 2, dans laquelle deux poteaux supportent trois tirants au moyen d'une partie triangulaire de tirants qui a pour deux sommets le sommet de deux poteaux et pour troisième sommet l'union des deux parties initiales de tirants ; à partir des trois sommets susmentionnés, les trois tirants s'étendent vers les pôles opposés de la couche.

4. Installation selon la revendication 1, dans laquelle la première couche et la seconde couche sont positionnées de manière à ce que leurs tirants respectifs soient sensiblement orthogonaux les uns aux autres et les dispositifs (D) sont positionnés près des intersections entre les tirants des deux couches, de manière à former, vu du dessus, une structure en damier.

5. Installation selon la revendication 1, dans laquelle la première couche et la seconde couche sont positionnées de manière à ce que les tirants respectifs soient orientés les uns aux autres selon un angle défini et que les dispositifs (D) soient positionnés près des intersections entre les tirants des deux couches, de manière à former, vu du dessus, une structure en damier.

6. Installation selon la revendication 1, dans laquelle la première couche et la seconde couche sont positionnées de manière à ce que les tirants respectifs, sensiblement parallèles, soient décalés les uns aux autres et que les dispositifs (D) soient positionnés en rangées, chacun étant contraint à un tirant de la couche supérieure et à un tirant de la couche inférieure.

7. Installation selon la revendication 1, dans laquelle la première couche et la seconde couche sont positionnées de manière à présenter les tirants respectifs inclinés les uns aux autres de façon à former, vu du dessus, une structure à grilles rhomboïdales.

8. Installation selon la revendication 1, dans laquelle les tirants longitudinaux et les câbles de connexion des deux couches comprennent une partie terminale (TST, TIT) et (CST, CIT) fixée au sol.

9. Installation selon la revendication 1, dans laquelle la variation de la position et de la hauteur d'une couche par rapport à l'autre permet de modifier l'orientation, en particulier l'angle d'inclinaison (a) du dispositif (D) par rapport au plan horizontal.

10. Installation selon la revendication 1, dans laquelle les dispositifs (D) sont contraints aux tirants selon un axe ayant un angle d'inclinaison (a) par rapport au plan horizontal et peuvent à leur tour tourner autour de cet axe.

11. Installation selon la revendication 5, dans laquelle les panneaux sont positionnés en groupes et chaque groupe sur chaque rangée est espacé de l'autre, tandis que sur la rangée adjacente les panneaux sont également espacés, mais décalés par rapport à la rangée adjacente, afin de former une structure de panneaux en damier.

12. Installation selon la revendication 4, dans laquelle les panneaux sont positionnés en groupes sur les intersections entre les tirants de la première couche et de la seconde couche, en laissant à chaque fois une intersection libre de panneaux, créant ainsi une structure de panneaux en damier.

13. Installation selon la revendication 5, dans laquelle des formes végétales de différents types (plantes, arbres, arbustes, etc.) peuvent être cultivées sous la structure de traction au sol.

14. Installation selon la revendication 1, dans laquelle des installations agricoles telles que des serres ou autres peuvent être obtenues sous la structure de traction.
